# EUROPÄISCHE PATENTANMELDUNG

(11) **EP 4 009 412 A1**
(43) Veröffentlichungstag der Anmeldung: **08.06.2022**
(21) Anmeldenummer: 21209217.5
(22) Anmeldetag: 19.11.2021
(51) Int. Cl.: H01M 10/0525, H01M 10/42, H01M 50/249, H01M 50/30, H01M 50/383, H01M 50/583

(54) **ENERGIESPEICHERVORRICHTUNG UND ÜBERWACHUNGSEINHEIT FÜR EINE ENERGIESPEICHERVORRICHTUNG**

(30) Priorität: 04.12.2020 DE 102020132340
(71) Anmelder: INTILION GmbH, 08056 Zwickau (DE)
(72) Erfinder: Reinhold, Stefan Dipl.-Ing., 08058 Zwickau (DE)
(74) Vertreter: Brinkmann, Stefan Ulrich

(57) **Zusammenfassung**

Die Erfindung betrifft eine Energiespeichervorrichtung für ein Fahrzeug, insbesondere ein Bahnfahrzeug, bestehend aus zumindest zwei Zellmodulen, die nebeneinander angeordnet und unmittelbar miteinander in Reihe oder parallel geschaltet sind, wobei die Zellmodule durch eine Sicherungseinrichtung elektrisch und/oder mechanisch miteinander verbunden sind und die Sicherungseinrichtung einen Signalgeber aufweist, über den ein Signal für eine Brandmeldeanlage generierbar ist, wobei die Zellmodule (2) jeweils zumindest eine Überdrucköffnung (4) aufweisen und wobei der Signalgeber (7) oberhalb der Überdrucköffnungen (4) derart angeordnet ist, dass der Signalgeber (7) im Falle eines thermischen Durchgehens durch über die aus zumindest einer Überdrucköffnung (4) austretenden Druckgase aktivierbar ist und ein Signal an die Sicherungseinrichtung bzw. die Brandmeldeanlage sendet, dadurch gekennzeichnet, dass jedes Zellmodul (2) eine Mehrzahl von Überdrucköffnungen (4) aufweist, die auf einer Linie in gleichmäßigen Abständen in Längsrichtung des Zellmoduls (2) angeordnet sind, wobei die Überdrucköffnungen (4) unterhalb von klammerförmigen Halterungen (5) angeordnet sind, wobei jede Halterung (5) im Querschnitt U-förmig ausgebildet ist, so dass sie eine nach oben hin ausgerichtete Aufnahme (6) ausbildet, die der Aufnahme des Signalgebers (7) dient.

## Beschreibung

Die Erfindung betrifft eine Energiespeichervorrichtung für ein Fahrzeug, insbesondere ein Bahnfahrzeug, bestehend aus zumindest zwei Zellenmodulen, die nebeneinander angeordnet und unmittelbar miteinander in Reihe oder parallel geschaltet sind, wobei die Zellmodule durch eine Sicherungseinrichtung elektrisch und/oder mechanisch miteinander verbunden sind und die Sicherungseinrichtung einen Signalgeber aufweist, über den ein Signal für eine Brandmeldeanlage generierbar ist, wobei die Zellmodule jeweils zumindest eine Überdrucköffnung aufweisen und wobei der Signalgeber oberhalb der Überdrucköffnungen derart angeordnet ist, dass der Signalgeber im Falle eines thermischen Durchgehens durch über die aus zumindest einer Überdrucköffnung austretenden Druckgase aktivierbar ist und ein Signal an die Sicherungseinrichtung bzw. die Brandmeldeanlage sendet.

Des Weiteren betrifft die Erfindung eine Überwachungseinheit für eine, zumindest zwei nebeneinander angeordnete und unmittelbar miteinander in Reihe oder parallel geschaltete Zellmodule aufweisende Energiespeichervorrichtung für ein Fahrzeug, insbesondere ein Bahnfahrzeug, mit einer, die Zellmodule elektrisch und/oder mechanisch miteinander verbindenden Sicherungseinrichtung, die einen Signalgeber aufweist, über den ein Signal für eine Brandmeldeanlage generierbar ist, wobei der Signalgeber im Falle eines thermischen Durchgehens durchaus zumindest einer Überdrucköffnung eines Zellmoduls austretende Druckgase aktivierbar ist und ein Signal an die Sicherungseinrichtung bzw. die Brandmeldeanlage sendet, wobei der Signalgeber oberhalb zumindest einer Überdrucköffnung angeordnet ist.

Elektrisch angetriebene Fahrzeuge, insbesondere Bahnfahrzeuge benötigen zum Antrieb oder auch zur elektrischen Versorgung von technischen Einrichtungen in der Regel einen Energiespeicher mit hohem Energiegehalt. Meist werden hier sogenannte Hochvolt-Batterien eingesetzt, deren Spannung über 100 V, zum Beispiel bei 400 V liegt. Für derartige Batterien bzw. Energiespeicher eignen sich insbesondere Lithium-ionen-Batterien.

Der Einsatz von Lithium-Ionen-Batterien in Fahrzeugen erfordert umfangreiche Maßnahmen zur Gewährleistung der Sicherheit im Fehlerfall oder bei Unfällen. Dennoch könnte es zum Beispiel durch Überladung oder Kurzschluss zu chemischen Reaktionen in den einzelnen Zellmodulen der Batterien kommen, die einen sogenannten "thermischen Event" mit möglicher Gasentwicklung, Öffnen von Zellen und Ablassen von Gasen zur Folge haben. Durch den dicht gedrängten Aufbau der Batterien aufgrund eines nur begrenzt zur Verfügung stehenden Bauraums in Fahrzeugen können Nachbarzellen durch den thermischen Event in einem Zellmodul in Mitleidenschaft gezogen werden und selbst in Brand geraten.

Herkömmliche Lithium-Ionen-Batterien enthalten Hardware- und Software-Maßnahmen zur Vermeidung solcher Ereignisse. Beispielsweise umfassen derartige Maßnahmen eine elektronische Überwachung der Zellspannungen und Ströme, Schütze zum Schalten des Stroms oder mindestens eine Sicherung. Die Überladung der Batterien wird so elektronisch durch Hardware und Software verhindert. Dennoch können all diese Maßnahmen beispielsweise durch fehlerhafte oder beschädigte Bauteile oder bei einem Unfall möglicherweise versagen. Auch sind Softwarefehler nicht auszuschließen.

Aus dem Stand der Technik, beispielsweise der DE 10 2012 001 156 A1 ist eine Energiespeichervorrichtung bekannt. Diese vorbekannte Energiespeichervorrichtung weist mindestens zwei Zellmodule auf, die nebeneinander angeordnet und unmittelbar miteinander in Reihe oder parallel geschaltet sind. Die beiden Zellmodule sind durch eine Sicherungseinrichtung elektrisch und mechanisch miteinander verbunden. Die Sicherungseinrichtung ist durch vorgegebene Wärme oder vorgegebenen mechanischen Druck trennbar, sodass die beiden Zellmodule im getrennten Zustand der Sicherungseinrichtung elektrisch und mechanisch voneinander getrennt sind.

Aus der DE 10 2012 022 126 A1 ist ferner eine Überwachungseinheit und ein Verfahren zur Überwachung einer Batteriesicherheitseinrichtung bekannt. Diese Überwachungseinheit hat eine Druckentlastungseinrichtung, die mit wenigstens einer Batterie operativ verbunden ist und bei einer unerwünschten Druckerhöhung auslöst. Über eine elektromechanische Detektionsschaltung, die an der Druckentlastungseinrichtung angeordnet und operativ mit dieser verbunden ist und die einen ersten Zustand oder einen zweiten Zustand einnimmt kann ein Signal bereitgestellt werden, welches bei einem Wechsel vom ersten Zustand in den zweiten Zustand generiert wird.

Im Stand der Technik werden oftmals Schmelzsicherungen verwendet, die bei einem Temperaturanstieg schmelzen und eine elektrische Leitung unterbrechen. Alternativ können auch Trennelemente vorgesehen sein, die zwischen den Zellmodulen angeordnet sind und die bei Temperaturanstieg ihr Volumen vergrößern, sodass ein die Zellmodule miteinander verbindender elektrischer Leiter auf Zug oder Scherung beansprucht wird, sodass der elektrische Leiter abreißt.

Aus dem Stand der Technik ist gemäß der WO 2020/220 462 A1 ferner eine Batterieanordnung bekannt, dergemäß Batterieeinheiten zusammengeschlossen sind, wobei jede Batterieeinheit über Ablassventile verfügt. Über ein solches Ablassventil soll im Havariefall ein Druckausgleich stattfinden können. Oberhalb der Ablassventile ist eine Alarmauslöseeinrichtung angeordnet, die im Havariefall austretende Gase detektieren und einen Alarm auslösen kann. Die Alarmauslöseeinrichtung ist aus einzelnen miteinander verbundenen Drähten und Stäben gebildet.

Aus der JP 2005-322471 A ist eine weitere Batterieanordnung bekannt, die über einzelne miteinander verbundene Batteriemodule verfügt. Die Batteriemodule weisen jeweils mit einer Folie verschlossene Öffnungen auf, wobei die Folie im Havariefall aufreißt und einen oberhalb der Öffnung verlegten Brandmeldedraht aktiviert.

Ausgehend von diesem Stand der Technik liegt der Erfindung die **Aufgabe** zugrunde, eine gattungsgemäße Energiespeichervorrichtung bzw. eine gattungsgemäße Überwachungseinheit bzw. ein gattungsgemäßes Verfahren derart weiterzubilden, dass eine standardisierte Verwendung bei einer Vielzahl von unterschiedlichen Anordnungen von Zellmodulen möglich ist, wobei gleichzeitig schnell und frühzeitig ein Meldesignal generiert werden kann, um erforderliche Sicherheitsmaßnahmen einleiten zu können.

Erfindungsgemäß ist nun bei einer Energiespeichervorrichtung zur **Lösung** dieser Aufgabenstellung vorgesehen, dass jedes Zellmodul eine Mehrzahl von Überdrucköffnungen aufweist, die auf einer Linie in gleichmäßigen Abständen in Längsrichtung des Zellmoduls angeordnet sind, wobei die Überdrucköffnungen unterhalb von klammerförmigen Halterungen angeordnet sind, wobei jede Halterung im Querschnitt U-förmig ausgebildet ist, so dass sie eine nach oben hin ausgerichtete Aufnahme ausbildet, die der Aufnahme des Signalgebers dient.

Bei einer erfindungsgemäßen Energiespeichervorrichtung ist somit der Signalgeber unmittelbar oberhalb einer Überdrucköffnung angeordnet, die im Normalbetrieb der Energiespeichervorrichtung geschlossen ist. Steigt der Druck innerhalb der Energiespeichervorrichtung aufgrund einer chemischen Reaktion und/oder einer Hitzeentwicklung an, so wird die Überdrucköffnung durch ansteigenden Druck automatisch geöffnet, um den Überdruck in der Energiespeichervorrichtung abzubauen. Hierbei wird nun der Signalgeber mit dem Druck und/oder mit thermischer Energie beaufschlagt, sodass entweder aufgrund der gleichzeitig austretenden Wärmeenergie der Signalgeber thermisch belastet wird und/oder aufgrund des Drucks eine mechanische Belastung des Signalgebers erfolgt.

In beiden Fällen wird der Signalgeber belastet, sodass er aufgrund der thermischen Energie oder der mechanischen Energie ein von der Sicherungseinrichtung bzw. der Brandmeldeanlage erkennbares Signal generiert, welches Signal dazu genutzt wird die Energiespeichervorrichtung abzuschalten und/oder beispielsweise ein Signal optischer oder akustischer Art innerhalb des Fahrzeugs zu generieren, welches Insassen in dem Fahrzeug zum Verlassen des Fahrzeugs auffordert. Es können auch andere Einrichtungen, wie Feuerlöscheinrichtungen, Sicherheitstüren, Notsender oder dergleichen über die Sicherungseinrichtung bzw. die Brandmeldeanlage angesteuert und/oder aktiviert werden.

Die erfindungsgemäße Konstruktion stellt dabei sicher, dass eine positionssichere und positionsgenaue Lagerung des Signalgebers oberhalb der Überdrucköffnungen gewährleistet ist. Hierzu dienen die erfindungsgemäß vorgesehenen Halterungen, die im Querschnitt U-förmig ausgebildet sind, so dass sich jeweils nach oben hin ausgerichtete Aufnahmen ausbilden, die der Aufnahme des Signalgebers dienen.

Die erfindungsgemäße Konstruktion stellt insgesamt sicher, dass der Signalgeber insbesondere beispielsweise aufgrund von Erschütterungen und/oder dergleichen Belastungen der Energiespeichervorrichtung nicht verrutschen und damit aus seiner Überdeckung mit den Überdrucköffnungen gelangen kann. Dies gewährleistet einen sicheren bestimmungsgemäßen Betrieb. Darüber hinaus ist eine einfache Montage möglich, da zur positionsgenauen Fixierung des Signalgebers lediglich ein Eindringen des Signalgebers in die dafür vorgesehenen Halterungen erforderlich ist. Da die Halterungen ihrerseits in Relation zu den Überdrucköffnungen lagefixiert sind, ergibt sich automatisch auch eine positionsgenaue Lagerfixierung des Signalgebers durch die Halterungen.

Gemäß einem weiteren Merkmal der Erfindung ist vorgesehen, dass eine Halterung von einer Überdrucköffnung aufgenommen ist. Gemäß dieser Ausführungsform dient eine Überdrucköffnung mithin selbst als Aufnahme für eine Halterung. Dies unterstützt eine vereinfachte Montage und stellt im endmontierten Zustand sicher, dass ein Signalgeber direkt oberhalb einer Überdrucköffnung zu liegen kommt, und zwar positionsgenau und positionssicher. Dabei ist in diesem Zusammenhang ferner von synergetischem Vorteil, dass die Überdrucköffnung zweierlei Funktionen erfüllt. Zum einen dient sie insbesondere im Havariefall dafür, einen überdruckbedingten Gasablass zu ermöglichen. Ferner dient sie als Ankerpunkt für eine Halterung, nimmt mithin die Halterung im endmontierten Zustand lagesicher auf. Auf zusätzliche Befestigungsmittel oder -einrichtungen kann so in vorteilhafter Weise verzichtet werden.

Gemäß einem weiteren Merkmal der Erfindung ist in diesem Zusammenhang vorgesehen, dass eine Halterung einen der Aufnahme gegenüberliegenden Abschnitt aufweist, der in der Überdrucköffnung angeordnet ist. Dieser Abschnitt kann als Verbindungsabschnitt bezeichnet werden und dient der lagesicheren Anordnung einer Halterung in der dazu gehörigen Überdrucköffnung. Für einen dichten Verschluss einer Überdrucköffnung kann in diesem Zusammenhang vorgesehen sein, dass der Verbindungsabschnitt über eine Dichteinrichtung verfügt. Von Vorteil dieser Ausgestaltung ist ferner, dass eine vereinfachte Montage dadurch möglich ist, dass eine Halterung zur lagesicheren Anordnung am Zellmodul mit ihrem Verbindungsabschnitt voran lediglich in die zugehörige Überdrucköffnung einzuführen ist.

Gemäß einem weiteren Merkmal der Erfindung ist vorgesehen, dass die Überdrucköffnung mittels des zugehörigen Abschnitts einer Halterung verschlossen ist, vorzugsweise gasdicht. Im bestimmungsgemäßen Verwendungsfall ist so ein ungewollter Gasaustritt aus einer Überdrucköffnung ausgeschlossen. Dabei ist die Halterung bzw. der zur Anordnung der Halterung in einer Überdrucköffnung vorgesehene Verbindungsabschnitt derart ausgebildet, dass er im Havariefall die Überdrucköffnung freigibt, so dass ein Druckausgleich durch Gasaustritt ermöglicht ist. Die Halterung bzw. der Verbindungsabschnitt können zu diesem Zweck mit einer Sollbruchstelle, einer Sollöffnung und/oder dergleichen ausrüstet sein, die im Havariefall ein Öffnen der zugehörigen Überdrucköffnung sicherstellt. Dabei bleibt die Halterung auch im Havariefall im Übrigen in Takt, so dass nach einem bestimmungsgemäßen Öffnen der Überdrucköffnung im Havariefall durch die Halterung im Weiteren eine positionsgenaue und sichere Lagerung des Signalgebers sichergestellt ist. Alternativ kann auch vorgesehen sein, dass es im Gasaustrittsfall zu einer Zerstörung einer zugehörigen Halterung kommt, in welchem Fall die zu der zerstörten Halterung benachbarten Halterungen für eine positionssichere und genaue Lagerung des Signalgebers sorgen.

Vorzugsweise ist der Signalgeber als elektrischer Leiter ausgebildet, der endseitig mit der Sicherungseinrichtung und/oder der Brandmeldeanlage verbunden ist. In den Signalgeber kann beispielsweise eine Schmelzsicherung integriert sein, die oberhalb der Überdrucköffnung angeordnet ist, sodass beim Austritt thermischer Energie durch die geöffnete Überdrucköffnung die Schmelzsicherung schmilzt und den elektrischen Leiter unterbricht. Die Unterbrechung des elektrischen Leiters erzeugt in der Sicherungseinrichtung ein Signal, welches als Signal für eine Fehlfunktion gewertet wird.

Nach einem weiteren Merkmal der Erfindung ist vorgesehen, dass der Signalgeber zwei elektrische, parallel verlaufende Leiter aufweist, die getrennt voneinander mit einem Mantel aus einem, bei einer vorgegebenen Temperatur schmelzfähigem Material umgeben sind. Wird die vorgegebene Temperatur beispielsweise beim Öffnen der Überdrucköffnung und dem Austritt von heißen Gasen erreicht oder überschritten, so schmilzt der die beiden Leiter umgebende Mantel im Bereich oberhalb der Überdrucköffnung und die beiden Leiter treten in Kontakt zueinander und erzeugen einen Kurzschluss. Dieser Kurzschluss wiederum stellt das Signal für die Sicherungseinrichtung bzw. die Brandmeldeanlage im voranstehenden Sinne dar.

Vorzugsweise verläuft der Signalgeber in Längsachsenrichtung der Zellmodule, wobei der Signalgeber im Bereich von Schmalseiten der Zellmodule einen im Wesentlichen U-förmigen oder halbkreisförmigen Verlauf aufweist. Bei mehreren Zellmodulen ist der Signalgeber daher schlaufenförmig oberhalb der Zellmodule angeordnet, wobei der Signalgeber über einer Vielzahl von linear angeordneten Überdrucköffnungen eines jeden Zellmoduls angeordnet ist. Der Signalgeber ist im Bereich der Überdrucköffnungen mit dem Zellmodul verbunden. Insbesondere eignet sich hierzu eine Verklebung des Signalgebers mit einem Gehäuse, welches die Überdrucköffnung aufweist. Mehrere Gehäuse, die auch einstückig mit dem Zellmodul ausgebildet sein können, sind in gleichmäßigen Abständen auf einer Oberseite des Zellmoduls angeordnet. Der Signalgeber ist bevorzugt oberhalb jeder Überdrucköffnung eines jeden Zellmoduls angeordnet.

Das Gehäuse mit der Überdrucköffnung kann beispielsweise eine Aufnahme aufweisen, in der der Signalgeber angeordnet ist. Der beispielsweise als elektrischer Leiter ausgebildete Signalgeber kann in eine solche Aufnahme eingeclipst und formschlüssig gehalten sein. Diese Aufnahme ist im Querschnitt im Wesentlichen U-förmig ausgebildet und weist zwei beabstandet zueinander angeordnete Schenkel auf, wobei die Schenkel in ihren Bereichen aufeinanderzu ausgerichtete Vorsprünge haben, sodass der elektrische Leiter bei der Montage in die entsprechende Aufnahme eingedrückt und von diesen Vorsprüngen lagefixiert wird.

Zumindest zwei Zellmodule sind vorzugsweise in einem gemeinsamen Gehäuse angeordnet, wobei das Gehäuse mit einem Deckel fest verschließbar ist. Ein derartiges Gehäuse stellt eine weitere Sicherheitseinrichtung da, insoweit Fehlfunktionen der Zellmodule innerhalb des Gehäuses auftreten können und beispielsweise das Austreten von heißen Gasen aus dem verschlossenen Gehäuse verhindert oder zumindest verzögert wird. Dennoch wird die Fehlfunktion der Zellmodule in unmittelbarer Nähe der Zellmodule detektiert und das erforderliche Signal generiert, um Notmaßnahme schnell einleiten zu können.

Erfindungsgemäß ist zur Lösung der voranstehend genannten Aufgabenstellung bei einer gattungsgemäßen Überwachungseinheit vorgesehen, dass jedes Zellmodul eine Mehrzahl von Überdrucköffnungen aufweist, die auf einer Linie in gleichmäßigen Abständen in Längsrichtung des Zellmoduls angeordnet sind, wobei die Überdrucköffnungen unterhalb von klammerförmigen Halterungen angeordnet sind, wobei jede Halterung im Querschnitt U-förmig ausgebildet ist, so dass sie eine nach oben hin ausgerichtete Aufnahme ausbildet, die der Aufnahme des Signalgebers dient.

Neben austretenden Druckgasen kann das Signal an die Sicherungseinrichtung bzw. die Brandmeldeanlage auch dann gesendet werden, wenn alternativ oder ergänzend eine thermische Energie oberhalb einer geöffneten Überdrucköffnung ansteht, die den Signalgeber aktiviert.

Der Signalgeber ist vorzugsweise als elektrischer Leiter ausgebildet, der endseitig mit der Sicherungseinrichtung und/oder der Brandmeldeanlage verbunden ist. Beispielsweise kann der Signalgeber zwei elektrische, parallel verlaufende Leiter aufweisen, die getrennt voneinander mit einem Mantel aus einem, bei einer vorgegebenen Temperatur schmelzfähigem Material umgeben sind. Alternativ kann der Signalgeber als Schmelzsicherung ausgebildet sein.

Im Übrigen ergeben sich hinsichtlich der erfindungsgemäßen Überwachungseinheit ebenfalls die schon vorstehend anhand der erfindungsgemäßen Energiespeichervorrichtung erläuterten Vorteile.

Verfahrensseitig ist ferner vorgesehen, dass die Zellmodule jeweils zumindest eine Überdrucköffnung aufweisen und dass der Signalgeber oberhalb der Überdrucköffnungen derart angeordnet wird, dass der Signalgeber im Falle eines thermischen Durchgehens durch über, aus zumindest einer Überdrucköffnung austretende Druckgase aktiviert wird und ein Signal an die Sicherungseinrichtung bzw. die Brandmeldeanlage sendet. Auch hier gilt, dass das Verfahren nicht darauf beschränkt ist, dass lediglich eine Signalauslösung über austretende Druckgase möglich ist, sondern, dass auch thermische Energie, die über eine geöffnete Überdrucköffnung austritt genutzt werden kann, um den Signalgeber zu aktivieren und somit das Signal als Indikator eines Notfalls zu übermitteln. Bei der Herstellung eines erfindungsgemäßen Energiespeichervorrichtung ist somit vorgesehen, dass die Zellmodule mit zumindest einer Überdrucköffnung ausgebildet werden und dass der Signalgeber oberhalb der Überdrucköffnungen angeordnet wird. Die bevorzugte Ausgestaltung und damit bevorzugte Weiterbildungen des erfindungsgemäßen Verfahrens ergeben sich aus den konstruktiven Merkmalen der Energiespeichervorrichtung, wie sie voranstehend beschrieben sind.

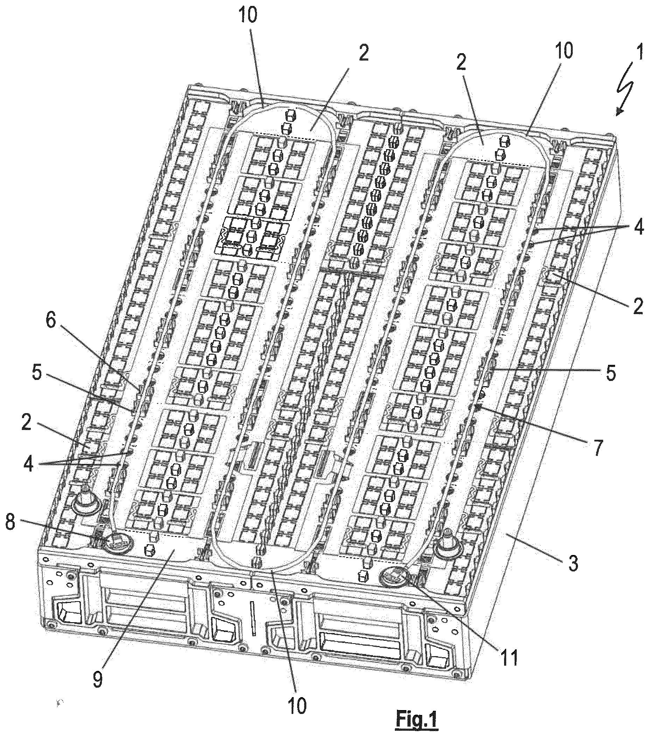

Weitere Merkmale und Vorteile der Erfindung ergeben sich aus der nachfolgenden Beschreibung anhand der einzigen Figur 1, in der eine Energiespeichervorrichtung für ein Fahrzeug in perspektivischer Ansicht dargestellt ist.

Die Figur 1 zeigt eine Energiespeichervorrichtung 1 mit mehreren Zellmodulen 2, die in einem Gehäuse 3 nebeneinander angeordnet sind, wobei das Gehäuse 2 mit einem nicht dargestellten Deckel verschließbar ist.

Jedes Zellmodul 2 hat fünf Überdrucköffnungen 4, die auf einer Linie in gleichmäßigen Abständen in Längsachsenrichtung eines jeden Zellmoduls 2 angeordnet sind. Die Überdrucköffnungen 4 sind unterhalb von klammerförmigen Halterungen 5 angeordnet.

Jede Halterung 5 ist im Querschnitt U-förmig ausgebildet, sodass sich eine nach oben hin ausgerichtete Aufnahme 6 ausbildet, die der Aufnahme eines Signalgebers 7 dient. Der Signalgeber 7 ist als elektrischer Leiter, beispielsweise als Brandmeldekabel ausgebildet, wobei der Signalgeber 7 mit einem ersten Ende 8 an einem elektrisch leitfähigen Element 9 befestigt ist und sich von da aus in Längsachsenrichtung des ersten Zellmoduls 2 derart erstreckt, dass der Signalgeber 7 in den Aufnahmen 6 jeder Halterung 5 dieses Zellmoduls 2 unmittelbar oberhalb der jeweiligen Überdrucköffnung 4 angeordnet ist. Am in Längsachsenrichtung des ersten Zellmoduls 2 beabstandeten stirnseitigen Ende des ersten Zellmoduls 2 ist der Signalgeber 7 in einer halbkreisförmigen Schlaufe 10 verlegt und verläuft von dort aus in Längsachsenrichtung des zweiten Zellmoduls 2. Auch im Bereich des zweiten Zellmoduls 2 ist der Signalgeber 7 in die Aufnahmen 6 der Halterungen 5 oberhalb der Überdrucköffnungen 4 im zweiten Zellmoduls 2 eingelegt.

Am Ende des Verlaufs des Signalgebers 7 oberhalb des zweiten Zellmoduls 2 ist der Signalgeber 7 wiederum in einer halbkreisförmigen Schlaufe 10 verlegt, sodass der Signalgeber 7 nachfolgend in Längsachsenrichtung des dritten Zellmoduls 2 und nach Durchlauf einer weiteren halbkreisförmigen Schlaufe 10 in Längsachsenrichtung des vierten Zellmoduls 2 verläuft, jeweils in den entsprechenden Aufnahmen 6 der entsprechenden Halterungen 5 oberhalb der Überdrucköffnungen 4 der Zellmodule 2 befestigt.

Das zweite Ende 11 des Signalgebers 7 ist ebenfalls an dem leitenden Element 9 befestigt.

Kommt es im Zuge einer Fehlfunktion der Energiespeichervorrichtung 1, beispielsweise in einem Zellmodul 2 zu einer chemischen und/oder thermischen Reaktion, in Folge dessen der Druck in dem Zellmodul 2 ansteigt und erreicht der Druck in diesem Zellmodul 2 eine Größe, die eine Öffnung zumindest einer Überdrucköffnung 4 verursacht, so wird der Signalgeber 7 oberhalb der Überdrucköffnung 4 mechanisch und/oder thermisch belastet und durch die Belastung getrennt. Die Trennung des Signalgebers 7 kann über das leitende Element 9 erfasst werden, woraus ein Signal resultiert, welches an eine nicht näher dargestellter Sicherungseinrichtung bzw. eine Brandmeldeanlage übermittelt wird. Auf der Basis dieses Signals, die eine Notfallmeldung signalisiert, können beispielsweise in einem mit der Energiespeichervorrichtung 1 ausgebildeten Bahnfahrzeug sitzende Passagiere gewarnt und zum Verlassen des Bahnfahrzeugs aufgefordert werden. Hierzu kann ein optisches und/oder akustisches Signal generiert werden.

Es besteht aber auch die Möglichkeit, dass das Signal die Fahrt des Bahnfahrzeugs an geeigneter Stelle unterbricht und beispielsweise bestimmte Notausstiege öffnet, die die Passagiere des Bahnfahrzeugs zum Verlassen nutzen können.

### Bezugszeichen liste

- 1: Energiespeichervorrichtung
- 2: Zellmodul
- 3: Gehäuse
- 4: Überdrucköffnung
- 5: Halterung
- 6: Aufnahme
- 7: Signalgeber
- 8: erstes Ende
- 9: Element
- 10: Schlaufe
- 11: zweites Ende

## Patentansprüche

1. Energiespeichervorrichtung für ein Fahrzeug, insbesondere ein Bahnfahrzeug, bestehend aus zumindest zwei Zellmodulen, die nebeneinander angeordnet und unmittelbar miteinander in Reihe oder parallel geschaltet sind, wobei die Zellmodule durch eine Sicherungseinrichtung elektrisch und/oder mechanisch miteinander verbunden sind und die Sicherungseinrichtung einen Signalgeber aufweist, über den ein Signal für eine Brandmeldeanlage generierbar ist, wobei die Zellmodule (2) jeweils zumindest eine Überdrucköffnung (4) aufweisen und wobei der Signalgeber (7) oberhalb der Überdrucköffnungen (4) derart angeordnet ist, dass der Signalgeber (7) im Falle eines thermischen Durchgehens durch über die aus zumindest einer Überdrucköffnung (4) austretenden Druckgase aktivierbar ist und ein Signal an die Sicherungseinrichtung bzw. die Brandmeldeanlage sendet, **dadurch gekennzeichnet, dass** jedes Zellmodul (2) eine Mehrzahl von Überdrucköffnungen (4) aufweist, die auf einer Linie in gleichmäßigen Abständen in Längsrichtung des Zellmoduls (2) angeordnet sind, wobei die Überdrucköffnungen (4) unterhalb von klammerförmigen Halterungen (5) angeordnet sind, wobei jede Halterung (5) im Querschnitt U-förmig ausgebildet ist, so dass sie eine nach oben hin ausgerichtete Aufnahme (6) ausbildet, die der Aufnahme des Signalgebers (7) dient.

2. Energiespeichervorrichtung nach Anspruch 1, **dadurch gekennzeichnet, dass** eine Halterung (5) von einer Überdrucköffnung (4) aufgenommen ist.

3. Energiespeichervorrichtung nach Anspruch 2, **dadurch gekennzeichnet, dass** eine Halterung (5) einen der Aufnahme (6) gegenüberliegenden Abschnitt aufweist, der in der Überdrucköffnung (4) angeordnet ist.

4. Energiespeichervorrichtung nach Anspruch 3, **dadurch gekennzeichnet, dass** die Überdrucköffnung (4) mittels des zugehörigen Abschnitts einer Halterung (5) verschlossen ist.

5. Energiespeichervorrichtung nach einem der Ansprüche 1 bis 4, **dadurch gekennzeichnet, dass** der Signalgeber (7) als elektrischer Leiter ausgebildet ist, der endseitig mit der Sicherungseinrichtung und/oder der Brandmeldeanlage verbunden ist.

6. Energiespeichervorrichtung nach Anspruch 5, **dadurch gekennzeichnet, dass** der Signalgeber (7) zwei elektrische, parallel verlaufende Leiter aufweist, die getrennt voneinander mit einem Mantel aus einem, bei einer vorgegebenen Temperatur schmelzfähigem Material umgeben sind.

7. Energiespeichervorrichtung nach einem der Ansprüche 1 bis 6, **dadurch gekennzeichnet, dass** der Signalgeber (7) in Längsachsenrichtung der Zellmodule (2) verlaufend angeordnet ist, wobei der Signalgeber im Bereich von Schmalseiten der Zellmodule (2) einen im Wesentlichen U-förmigen oder halbkreisförmigen Verlauf in einer Schlaufe (10) aufweist.

8. Energiespeichervorrichtung nach einem der Ansprüche 1 bis 7, **dadurch gekennzeichnet, dass** der Signalgeber (7) im Bereich der Überdrucköffnungen (4) mit dem Zellmodul (2) verbunden, insbesondere verklebt ist.

9. Energiespeichervorrichtung nach einem der Ansprüche 1 bis 8 **dadurch gekennzeichnet, dass** zumindest zwei Zellmodule (2) in einem gemeinsamen Gehäuse (3) angeordnet sind und dass das Gehäuse (3) verschließbar ist.

10. Energiespeichervorrichtung nach einem der Ansprüche 1 bis 9, **dadurch gekennzeichnet, dass** der Signalgeber (7) als Schmelzsicherung ausgebildet ist.

11. Überwachungseinheit für eine, zumindest aus zwei nebeneinander angeordneten und unmittelbar miteinander in Reihe oder parallel geschalteten Zellmodulen aufweisende Energiespeichervorrichtung für ein Fahrzeug, insbesondere ein Bahnfahrzeug, mit einer, Zellmodule elektrisch und/oder mechanisch miteinander verbindenden Sicherungseinrichtung, die einen Signalgeber aufweist, über den ein Signal für eine Brandmeldeanlage generierbar ist, wobei der Signalgeber (7) im Falle eines thermischen Durchgehens durch aus zumindest einer Überdrucköffnung (4) eines Zellmoduls (2) austretende Druckgase aktivierbar ist und ein Signal an die Sicherungseinrichtung bzw. die Brandmeldeanlage sendet, wobei der Signalgeber (7) oberhalb zumindest einer Überdrucköffnung (4) angeordnet ist, **dadurch gekennzeichnet, dass** jedes Zellmodul (2) eine Mehrzahl von Überdrucköffnungen (4) aufweist, die auf einer Linie in gleichmäßigen Abständen in Längsrichtung des Zellmoduls (2) angeordnet sind, wobei die Überdrucköffnungen (4) unterhalb von klammerförmigen Halterungen (5) angeordnet sind, wobei jede Halterung (5) im Querschnitt U-förmig ausgebildet ist, so dass sie eine nach oben hin ausgerichtete Aufnahme (6) ausbildet, die der Aufnahme des Signalgebers (7) dient.

12. Überwachungseinheit nach Anspruch 11, **dadurch gekennzeichnet, dass** der Signalgeber (7) als elektrischer Leiter ausgebildet ist, der endseitig mit der Sicherungseinrichtung und/oder der Brandmeldeanlage verbunden ist.

13. Überwachungseinheit nach Anspruch 12, **dadurch gekennzeichnet, dass** der Signalgeber (7) zwei elektrische, parallel verlaufende Leiter aufweist, die getrennt voneinander mit einem Mantel aus einem, bei einer vorgegebenen Temperatur schmelzfähigem Material umgeben sind.

14. Überwachungseinheit nach einem der Ansprüche 11 bis 13, **dadurch gekennzeichnet, dass** der Signalgeber (7) als Schmelzsicherung ausgebildet ist.
